# DEMANDE DE BREVET EUROPEEN

(11) **EP 3 888 828 A1**
(43) Date de publication de la demande: **06.10.2021**
(21) Numéro de dépôt: 21165442.1
(22) Date de dépôt: 29.03.2021
(51) Int. Cl.: B23C 3/00, G21D 1/00

(54) **MÉTHODE ET ENSEMBLE DE DÉCOUPE D'UNE PARTIE D'UNE PIÈCE D'UN RÉACTEUR NUCLÉAIRE**

(30) Priorité: 01.04.2020 FR 2003268
(71) Demandeur: Framatome, 92400 Courbevoie (FR)
(72) Inventeur: GUILLEMIN, Etienne, 69250 MONTANAY (FR); LACROIX, Marc, 69450 SAINT CYR AU MONT D'OR (FR)
(74) Mandataire: Lavoix

(57) **Abrégé**

La méthode comprend une étape de découpe d'une rainure (8) en effectuant une pluralité d'opérations de tréflage successives le long d'une ligne de découpe (L), chaque opération de tréflage comprenant les sous-étapes suivantes :
S1/ fraisage plongeant dans la pièce (3) à l'aide d'un outil de tréflage (7) selon une direction de plongée, de telle sorte que la rainure (8) est prolongée le long de la ligne de découpe (L) par enlèvement de matière dans la pièce (3) ;
S2/ extraction de l'outil de tréflage (7) hors de la rainure (8) ;
S3/ déplacement de l'outil de tréflage (7) d'un pas le long de la ligne de découpe (L).

## Description

L'invention concerne en général le démantèlement des réacteurs nucléaires.

Pour les opérations de démantèlement de réacteurs nucléaires, il est nécessaire de réaliser la découpe de structures en acier ayant des épaisseurs de plusieurs dizaines de millimètres. Ces structures sont par exemple la cuve sous pression du réacteur et les internes situés normalement dans la cuve.

Ces structures sont fortement activées, de telle sorte que les opérations de découpe doivent être réalisées en télé-opération.

Les procédés de découpe généralement utilisés pour cette gamme d'épaisseur sont des procédés thermiques, par exemple la découpe par plasma. Alternativement, des procédés mécaniques sont utilisés, par exemple la découpe à l'aide de fraises ou de scies.

Les procédés thermiques présentent le défaut de mettre en suspension de la matière sous forme de particules fines. En air, l'utilisation d'un procédé de découpe thermique impose des niveaux lourds et onéreux de confinement et de ventilation et de filtration. En eau, en plus de contrainte similaires s'ajoute la perte de visibilité car les particules en suspension opacifient l'eau.

Les procédés de découpe mécanique classiques de type sciage ou fraisage ne sont pas adaptés à toutes les géométries de pièces à découper. Leur mise en œuvre suppose un accès dégagé à la zone à découper. Par ailleurs, les procédés mécaniques de découpe génèrent des efforts de réaction importants, qui doivent être repris par la structure portant l'outil de coupe. Ceci complique l'opération de découpe, notamment quand celle-ci doit être réalisée in situ.

Dans ce contexte, l'invention vise à proposer un ensemble et une méthode de découpe mécanique d'une partie d'une pièce d'un réacteur nucléaire, adaptés pour des structures en acier de moyenne épaisseur et de géométries complexes, et ayant une efficacité suffisante.

A cette fin, l'invention porte selon un premier aspect sur une méthode pour découper une partie d'une pièce d'un réacteur nucléaire, la méthode comprenant les étapes suivantes :
- définition d'une ligne de découpe sur une surface de la pièce, autour de ladite partie ;
- découpe d'une rainure le long d'au moins une partie de la ligne de découpe à l'aide d'un outil de tréflage, en effectuant une pluralité d'opérations de tréflage successives le long de la ligne de découpe, chaque opération de tréflage comprenant les sous-étapes suivantes :
   S1/ fraisage plongeant dans la pièce à l'aide de l'outil de tréflage selon une direction de plongée, de telle sorte que la rainure est prolongée le long de la ligne de découpe par enlèvement de matière dans la pièce ;
   S2/ extraction de l'outil de tréflage hors de la rainure ;
   S3/ déplacement de l'outil de tréflage d'un pas le long de la ligne de découpe.

La découpe est réalisée selon un procédé connu sous le nom de tréflage en français, et sous le nom de « plunge milling » en anglais. Le tréflage est une méthode d'usinage de matériau, utilisant une fraise cylindrique travaillant en plongée, avançant suivant son axe. La fraise s'enfonce dans la pièce à découper, de telle sorte que le débit de coupe peut être élevé. Le débit d'enlèvement de matière peut ainsi atteindre plusieurs centimètres cubes par minute.

Le fait de réaliser des plongées juxtaposées par tréflage, permet de réaliser des trajectoires quelconques, sur des pièces offrant un accès de face.

La méthode de l'invention est notamment adaptée à la découpe de pièces dont la surface porte des structures saillantes. La machine de tréflage met en œuvre une fraise qui est montée sur un porte-outil dont la longueur peut être adaptée en fonction des contraintes d'accès. Le mouvement de la fraise est un mouvement de plongée et d'extraction, qui ne nécessite pas qu'un large espace soit disponible pour le débattement de l'outil de part et d'autre de la ligne de découpe.

La géométrie des copeaux générés par le procédé de tréflage est favorable. Les copeaux sont fractionnés par nature et de dimension relativement homogène, ce qui rend leur aspiration aisée.

Puisque la coupe se fait par la face de l'outil, les efforts de coupe sont majoritairement axiaux. On exploite de ce fait la rigidité de la broche de la machine et de l'outil dans leur axe. Les flexions de l'outil sont alors réduites au minimum possible. Ceci permet d'utiliser des outils ayant un ratio longueur utile / diamètre important et de simplifier la structure de la machine portant la fraise. Par ailleurs, la puissance nécessaire pour la coupe n'est que de quelques centaines de watts pour des diamètres de fraise de l'ordre de 25 mm (cas d'un tréflage dans l'acier inoxydable).

La méthode de l'invention peut également présenter une ou plusieurs des caractéristiques ci-dessous, considérées individuellement ou selon toutes les combinaisons techniquement possibles :
- à chaque sous-étape de fraisage plongeant, la direction de plongée est sensiblement perpendiculaire à la surface de la pièce au point où est réalisé le fraisage plongeant ;
- l'outil de tréflage est monté sur une machine de tréflage qui, à la sous-étape fraisage plongeant, est rigidement fixée à la pièce à découper de telle sorte qu'au moins 50% des efforts dus au tréflage sont repris par la pièce à découper ;
- l'étape de découpe de la rainure comprend une pluralité de séquences de tréflage, chaque séquence de tréflage comprenant une pluralité d'opérations de tréflage, la machine de tréflage étant rigidement fixée à un même point de la pièce pour les différentes opérations de tréflage d'une même séquence de tréflage et la machine de tréflage étant repositionnée entre deux séquences de tréflage.
- au cours d'une même séquence de tréflage, la sous-étape de déplacement de l'outil de tréflage le long de la ligne de découpe est effectuée par déplacement de l'outil de tréflage par rapport à un châssis de la machine de tréflage ;
- la pièce est l'un de la cuve sous pression d'un réacteur nucléaire en cours de démantèlement, ou d'un interne de ladite cuve ;
- la pièce est la cuve sous pression du réacteur nucléaire, les étapes de perçage étant réalisées à partir de la surface interne de la cuve, la rainure n'étant pas débouchante et restant fermée par une épaisseur de matière ;
- la méthode comporte une étape de découpe finale au cours de laquelle l'épaisseur de matière constituant le fond de la rainure est découpée.

Selon un second aspect, l'invention porte sur un ensemble de découpe d'une partie d'une pièce d'un réacteur nucléaire, l'ensemble comprenant:
- un outil de tréflage ;
- des moyens de positionnement de l'outil de tréflage par rapport à la pièce, configurés pour déplacer l'outil de tréflage par pas le long d'une ligne de découpe s'étendant sur une surface de la pièce autour de la partie à découper ;
- un entraînement de plongée, configuré pour déplacer l'outil de tréflage par rapport à la pièce suivant une direction de plongée, de telle sorte que l'outil de tréflage réalise un fraisage plongeant dans la pièce selon la direction de plongée et prolonge une rainure le long de la ligne de découpe par enlèvement de matière dans la pièce, et configuré pour extraire l'outil de tréflage hors de la rainure.

L'ensemble de découpe peut également présenter une ou plusieurs des caractéristiques ci-dessous, considérées individuellement ou selon toutes les combinaisons techniquement possibles :
- les moyens de positionnement comprennent une machine de tréflage, comportant un châssis et un verrouillage configuré pour fixer sélectivement le châssis sur la pièce ;
- la machine de tréflage comprend un châssis mobile, et une liaison pivotante du châssis mobile au châssis configurée pour permettre une rotation du châssis mobile par rapport au châssis autour d'un axe de pivotement sensiblement parallèle à la direction de plongée ;
- l'outil de tréflage est lié au châssis pivotant par l'entraînement de plongée ;
- les moyens de positionnement comprennent un porteur et un accouplement du porteur à la machine de tréflage, le porteur étant configuré pour déplacer la machine de tréflage par rapport à la pièce ;
- les moyens de positionnement comprennent un support lié à la pièce, la machine de tréflage étant indexée sur le support ;
- l'outil de tréflage comporte une fraise, un porte outil et une liaison démontable de la fraise au porte outil, l'ensemble comprenant un magasin de stockage avec au moins un emplacement de stockage d'une fraise de remplacement, et un actionneur configuré pour déverrouiller la liaison démontable de la fraise au porte outil, l'actionneur étant embarqué sur le magasin de stockage ou sur la machine de tréflage.

D'autres caractéristiques et avantages de l'invention ressortiront de la description détaillée qui en est donnée ci-dessous, à titre indicatif et nullement limitatif, en référence aux figures annexées, parmi lesquelles :
la figure 1 est une vue en perspective d'un ensemble de découpe selon l'invention, pour un premier mode de réalisation dans lequel la découpe est réalisée à sec, dans un atelier dédié ;
la figure 2 est une autre vue en perspective de l'ensemble de découpe et de l'atelier de la figure 1 ;
la figure 3 est une vue en élévation, de côté, de la machine de tréflage des figures 1 et 2 ;
la figure 4 est une vue en perspective de la machine de tréflage de la figure 3 ;
la figure 5 est une représentation schématique montrant un exemple de ligne de découpe adapté pour la découpe de la pièce illustrée sur la figure 8 ;
la figure 6 est une représentation schématique analogue à la figure 5, après évacuation de la partie de la pièce découpée ;
la figure 7 est une représentation schématique illustrant le principe du tréflage ;
la figure 8 est une vue, agrandie, d'une partie de la machine de tréflage des figures 3 et 4, fixée sur une pièce à découper ; et
la figure 9 est une représentation schématique simplifiée d'un second mode de réalisation de l'invention, dans laquelle la découpe est réalisée in situ, sous eau.

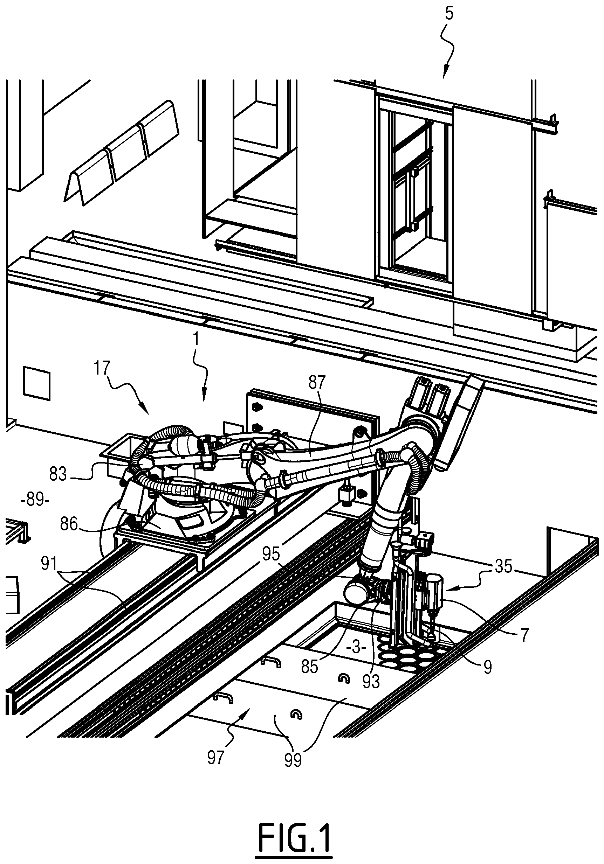

L'ensemble 1 représenté sur les figures 1 à 4 est destiné à découper une ou plusieurs parties d'une pièce 3 d'un réacteur nucléaire.

Le réacteur nucléaire est de tout type : PWR, BWR, graphite-gaz, surgénérateur ou tout autre type de réacteur nucléaire.

L'opération de découpe est typiquement réalisée pendant le démantèlement du réacteur nucléaire, après sa mise à l'arrêt définitif. En variante, l'ensemble de découpe est utilisé pour découper des pièces d'un réacteur nucléaire qui n'est pas en fin de vie. Ces pièces sont par exemple des pièces usées du réacteur nucléaire, extraites hors de celui-ci et remplacées par des pièces neuves. L'ensemble de découpe est aussi utilisé pour réaliser des interventions de réparation.

L'ensemble de découpe 1 est plus spécialement destiné à découper un interne de la cuve sous pression du réacteur nucléaire, ou la cuve sous pression elle-même.

La cuve sous pression est la cuve du réacteur nucléaire dans laquelle se trouve le cœur du réacteur nucléaire, c'est-à-dire les assemblages de combustible nucléaire. Elle sera désignées par le terme « cuve » dans la description qui va suivre.

Les internes de cuve peuvent être de tout type adapté : plaque-support supérieure, plaque supérieure du cœur, enveloppe de cœur, écran thermique, plaque-support inférieure etc.

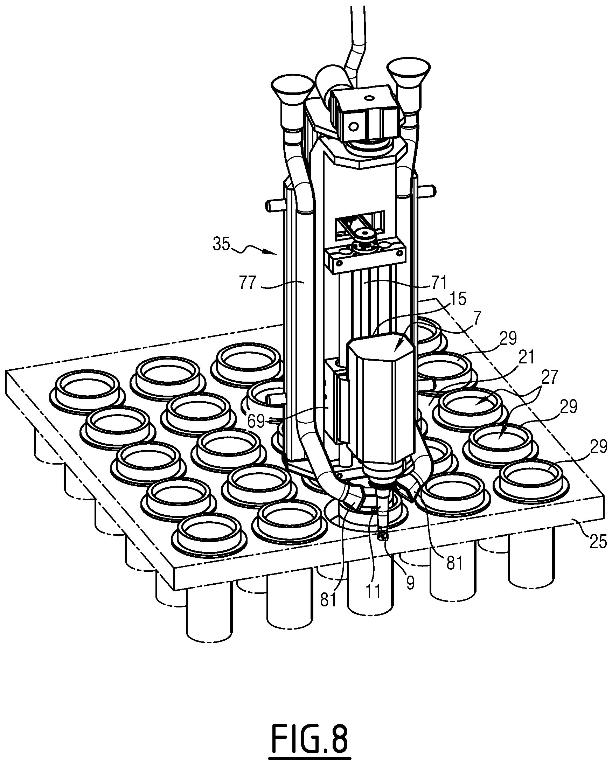

Dans l'exemple présenté sur les figures 1 à 8, la pièce à découper 3 est le sommier d'un réacteur nucléaire à neutrons rapides, appelé aussi surgénérateur. Le sommier fait partie des internes du réacteur nucléaire. C'est une structure mécanosoudée, intégrant les chandelles de maintien des assemblages de combustible du cœur. Le sommier est placé sous le cœur.

Toutefois, l'invention n'est pas limitée à la découpe de ce sommier et s'applique à toute sorte de pièces.

L'invention repose sur l'utilisation d'un outil de tréflage 7 pour réaliser la découpe de la pièce 3.

Le tréflage est un type particulier d'enlèvement de matière par fraisage.

Le fraisage, de manière connue, est une technique d'enlèvement de la matière d'une pièce sous forme de copeaux, cet enlèvement de matière résultant de la combinaison de deux mouvements : la rotation de l'outil de coupe, aussi appelée fraise, d'une part, et le mouvement relatif de la pièce à découper et de la structure portant la fraise l'une par rapport à l'autre, d'autre part.

Dans la méthode connue sous le nom de tréflage, la fraise est conçue pour travailler en plongée, c'est-à-dire s'enfonce à partir de la surface de la pièce vers l'intérieur de la pièce, la pièce restant fixe. La fraise s'enfonce suivant une direction de plongée, correspondant sensiblement à l'axe de rotation Z, et l'enlèvement de matière est fait par coupe en bout de fraise.

Le tréflage est essentiellement utilisé jusqu'à présent pour l'usinage de pièces neuves. Le tréflage permet d'éliminer des quantités de matière importantes, et de créer rapidement une préforme qui sera ensuite usinée à sa forme définitive par une autre technique, plus précise.

Dans l'invention, le tréflage est utilisé pour la découpe d'une partie P de la pièce 3.

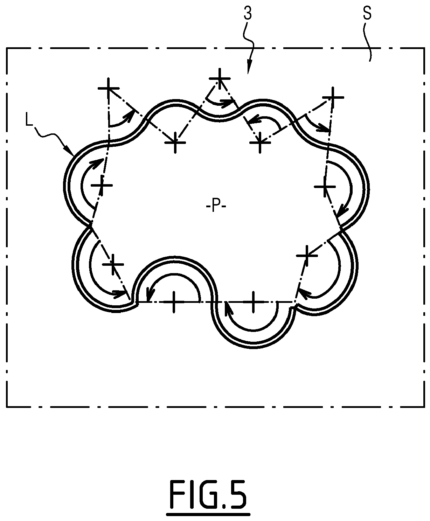

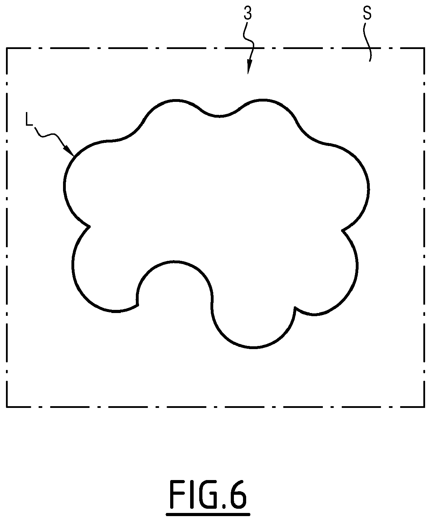

Selon l'invention, une ligne de découpe L est définie sur une surface S de la pièce 3, autour de ladite partie P (figures 5 et 6).

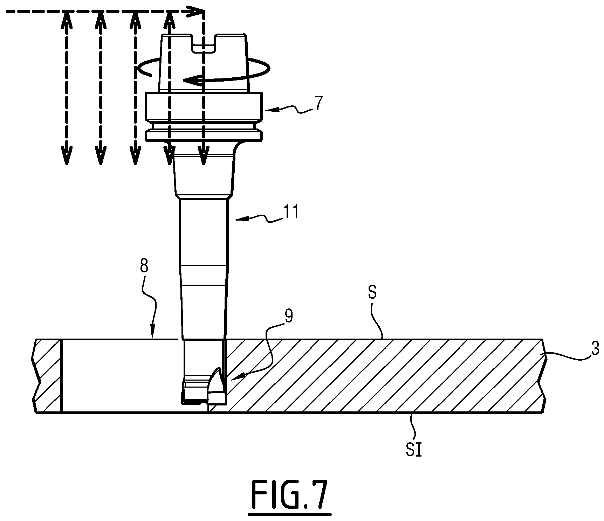

Une rainure 8 est découpée le long d'au moins une partie de la ligne de découpe L à l'aide d'un outil de tréflage 7, en effectuant une pluralité d'opérations de tréflage successives le long de la ligne de découpe L (figure 7).

Chaque opération de tréflage comprend les sous-étapes suivantes :
S1/ fraisage plongeant dans la pièce 3 à l'aide de l'outil de tréflage 7 selon une direction de plongée, de telle sorte que la rainure 8 est prolongée le long de la ligne de découpe L par enlèvement de matière dans la pièce 3 ;
S2/ extraction de l'outil de tréflage 7 hors de la rainure 8 ;
S3/ déplacement de l'outil de tréflage 7 d'un pas le long de la ligne de découpe L.

Ainsi, plusieurs fraisages plongeant sont réalisés côte-à-côte le long de la ligne de découpe L prédéterminée, en utilisant l'outil de tréflage 7, comme illustré sur la figure 7.

Chaque fraisage plongeant prolonge la rainure 8.

Le tréflage ne peut pas démarrer en pleine matière, la fraise n'étant pas adaptée pour un tel perçage. Typiquement, la rainure 8 est réalisée à partir d'un bord de la pièce. En variante, un perçage initial de la pièce 3 est réalisé en un point de la ligne de découpe L, avec un outil adapté à cet effet. L'outil de tréflage 7 est utilisé ensuite pour réaliser la rainure 8 à partir de cette amorce.

Comme illustré sur la figure 7, l'outil de tréflage 7 plonge sur le bord de la rainure 8 et prolonge la rainure 8 par plongées successives en avançant suivant un pas compatible avec ces caractéristiques de coupe (pas de 2 à 5 mm par exemple).

Le pas est typiquement inférieur à 50% du diamètre de la fraise, de préférence inférieure à 30% du diamètre de la fraise. Ainsi, seule les parties de la fraise ayant une grande vitesse circonférentielle sont utilisées pour l'enlèvement de matière. Les parties de la fraise ayant une vitesse faible ou nulle, par exemple le centre de la fraise, ne sont pas utilisées.

Ceci contribue à l'obtention d'une efficacité élevée pour l'enlèvement de la matière.

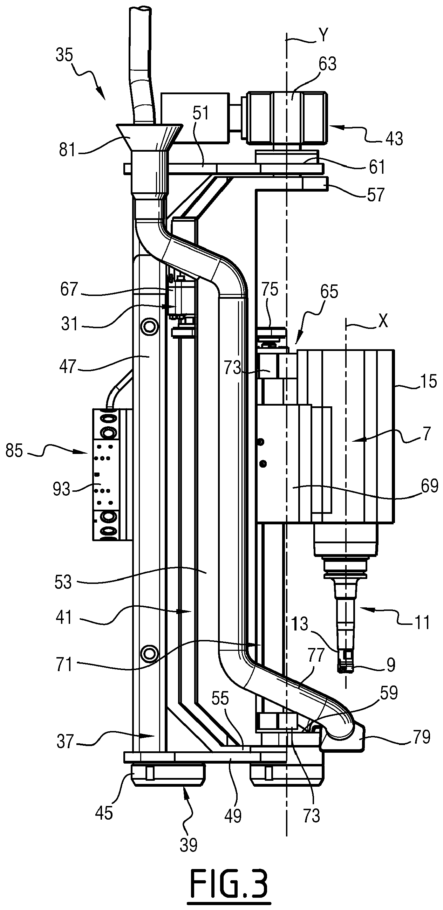

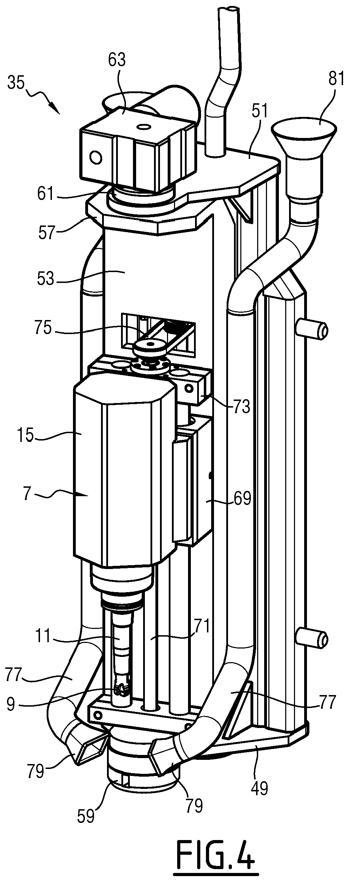

Comme visible notamment sur les figures 3 et 4, l'outil de tréflage 7 comporte un outil de coupe 9 appelé fraise, un porte outil 11 et une liaison démontable 13 de la fraise 9 au porte outil 11.

L'outil de tréflage 7 comporte encore un moteur 15 d'entrainement en rotation de la fraise 9 autour d'un axe de rotation Z.

La fraise 9 est du type adapté pour le tréflage.

L'ensemble de découpe 1 comporte des moyens 17 de positionnement de l'outil de tréflage 7 par rapport à la pièce à usiner 3, configurés pour déplacer l'outil de tréflage 7 par pas le long de la ligne de découpe L s'étendant sur la surface S de la pièce 3, autour de la partie P à découper.

Un exemple de ligne de découpe L est représenté sur la figure 5. Sur la figure 6, la pièce est représentée avec la partie P enlevée.

Dans l'exemple représenté, la ligne de découpe L est à contour fermé.

En variante, la ligne de découpe L n'est pas à contour fermé. Ceci est le cas notamment quand la partie P est située au niveau d'un bord de la pièce.

L'ensemble de la découpe 1 comporte par ailleurs un entrainement 31 de plongée, configuré pour déplacer l'outil de tréflage 7 par rapport à la pièce 3 suivant une direction de plongée, de telle sorte que l'outil de tréflage 7 réalise un fraisage plongeant dans la pièce 3 selon la direction de plongée, et prolonge la rainure 8 le long de la ligne de découpe P par enlèvement de matière dans la pièce 3. L'entrainement 31 est également configuré pour extraire l'outil de tréflage 7 hors du trou.

Les moyens de positionnement 17 et l'entrainement de plongée 31 sont typiquement configurés pour que les différentes plongées dans la pièce 3 créent une rainure 8 sensiblement continue le long de la ligne de découpe L. Ainsi, lorsque toutes les plongées ont été réalisés, la partie P est entièrement séparée du reste de la pièce 3.

Les fraisages plongeant sont débouchant ou non débouchant.

De préférence, la direction de plongée est sensiblement perpendiculaire à la surface S de la pièce 3 au point où est réalisé le fraisage plongeant.

Les moyens de positionnement 17 comprennent une machine de tréflage 35, comportant un châssis 37 et un verrouillage 39 configurés pour fixer sélectivement le châssis 37 sur la pièce à usiner 3.

Le verrouillage 39, dans l'exemple représenté, est prévu pour coopérer avec la pièce 3, pour verrouiller ainsi en position le châssis 37 par rapport à la pièce 3.

Par ce biais, le poids de la machine de tréflage 35 est repris directement par la pièce 3.

Par ailleurs, les efforts dûs au tréflage sont en majeure partie repris par la pièce à découper.

Comme visible sur les figures, la machine de tréflage 35 comporte avantageusement des conduits 77 d'aspiration des copeaux.

En variante, la machine ne comporte pas de conduit d'aspiration.

Les moyens de positionnement 17 comportent encore un porteur 83 et un accouplement 85 du porteur 83 à la machine de tréflage 35. L'accouplement est réversible ou non réversible.

Le porteur 83 est configuré pour déplacer la machine de tréflage 35 par rapport à la pièce 3.

Par exemple, le porteur 83 est un robot polyarticulé.

En variante, le positionnement de la machine de tréflage 35 n'est pas assuré par un porteur mais par des moyens de levage. La machine de tréflage 35 est indexée sur un support adapté et lié à la pièce 3. Tout autre moyen de liaison machine / pièce peut être envisagé (dont pieds magnétiques, ventouse à dépression, etc).

L'ensemble 1, selon un premier mode de réalisation correspondant aux figures 1 à 8, est intégré dans un atelier 5 de découpe à sec.

Cet atelier est agencé à tout endroit adapté, par exemple dans un bâtiment de la centrale nucléaire dont le réacteur est en cours de démantèlement. Les pièces à découper sont transférées depuis le réacteur nucléaire jusqu'à l'atelier par tous moyens adaptés.

Comme indiqué plus haut, cette pièce est par exemple le sommier d'un réacteur nucléaire à neutrons rapides. Ce sommier comporte une plaque supérieure appelée semelle supérieure 25, une plaque inférieure appelée semelle inférieure, non représentée, et une pluralité de tubes, appelés chandelles 27. La semelle supérieure 25 et la semelle inférieure sont placées l'une au-dessus de l'autre. Chaque chandelle 27 est sensiblement cylindrique, et s'étend de la semelle supérieure 25 à la semelle inférieure. L'extrémité supérieure 29 de chaque chandelle 27 est rigidement fixée à la semelle supérieure 25, et fait saillie sur une certaine hauteur au-dessus de la semelle supérieure 25.

De manière analogue, l'extrémité inférieure de la chandelle 27 est rigidement fixée à la semelle inférieure et fait saillie sous cette semelle inférieure.

Les chandelles 27 sont disposées selon plusieurs rangées parallèles les unes aux autres, en quinconce ou suivant un pas hexagonal.

La ligne de découpe L est définie sur la surface supérieure 21 de la semelle supérieure 25, tournée à l'opposé de la semelle inférieure. Elle passe autour d'un groupe de chandelle 27.

La ligne de découpe L comporte dans ce cas une pluralité d'arcs de cercle placés dans le prolongement les uns des autres. Typiquement, chaque portion en arc de cercle de la ligne de découpe 19 suit le contour de l'extrémité supérieure 29 d'une des chandelles 27.

Une telle forme est impérative du fait que l'espace disponible sur la surface supérieure 21 pour faire passer la ligne de découpe L est très restreint. Les extrémités supérieures 29 des chandelles sont très proches les unes des autres. Typiquement, les centres respectifs de deux extrémités supérieures 29 voisines sont séparés par un écartement de 179 mm. Le diamètre externe de chaque extrémité supérieure 29 est de 152 mm. L'espace disponible pour faire passer la ligne de découpe et la fraise est donc de 27 mm.

Pour la découpe d'un tel sommier, les fraisages plongeants sont traversants et traversent la pièce 3 sur toute son épaisseur.

Dans l'exemple représenté sur les figures, la rainure 8 traverse la semelle supérieure 25 sur toute son épaisseur. Elle débouche à la fois sur la surface supérieure 21 et sur la surface inférieure de la semelle 25.

La machine de tréflage 35 comprend par exemple un châssis mobile 41 et une liaison 43 pivotante du châssis mobile 41 au châssis 37, configurée pour permettre une rotation du châssis mobile 41 par rapport au châssis 37 autour d'un axe de pivotement Y sensiblement parallèle à la direction de plongée. L'outil de tréflage 7 est lié au châssis pivotant 41 par l'entrainement de plongée 31.

Le verrouillage 39, dans l'exemple représenté, est prévu pour coopérer avec la pièce 3, et plus précisément avec l'extrémité supérieure 29 d"au moins une des chandelles 27. Il comporte par exemple un fût 45 configuré pour être inséré à l'intérieur de l'extrémité supérieure 29, et des dents mobiles (non représentées), configurées pour coopérer avec la ou les chandelles 27,

Le châssis 37 comporte une poutre centrale 47, allongée parallèlement à l'axe de rotation Z, et des flasques supérieur et inférieur 49, 51 rigidement fixés à la poutre centrale 47. Le verrouillage 39 est porté par le flasque inférieur 49.

Le châssis mobile 41 comporte lui aussi une poutre centrale 53, allongée parallèlement à l'axe de pivotement Y, et des flasques supérieur et inférieur 55, 57.

La liaison pivotante 43 comporte un pivot inférieur 59, par lequel le flasque 55 est monté pivotant sur le flasque 49, autour de l'axe de pivotement Y.

La liaison 43 comporte encore un pivot supérieur 61 par lequel le flasque 57 est monté pivotant par rapport au flasque 51 autour de l'axe de pivotement Y.

La liaison pivotante 43 comporte encore une motorisation 63, configurée pour entrainer en rotation de manière contrôlée le châssis pivotant 41 par rapport au châssis 37. La motorisation 63 est typiquement un motoréducteur, montée sur le flasque 51.

L'entrainement de plongée 31 est de tout type adapté. Par exemple, il comprend un dispositif vis écrou 65 et une motorisation 67. L'outil de tréflage 7 est rigidement fixé à un chariot 69, comportant l'écrou. Le chariot 69 coopère avec la vis 71 montée sur le châssis mobile 41 par l'intermédiaire de paliers 73. Le chariot 69 est guidé en translation sur deux tiges guide cylindriques non référencées.

La motorisation 67 est rigidement fixée au châssis mobile 41. Elle entraine la vis 71 en rotation sélectivement dans les deux sens de rotation opposés, par l'intermédiaire d'une courroie 75. L'orientation de la vis 71 est sensiblement parallèle à la direction de plongée Z.

L'entrainement de plongée 31 comprend encore deux tiges non référencées, rigidement fixées au châssis mobile 41 de part et d'autre de la vis 71, et prévues pour guider le mouvement de translation du chariot 69.

Dans l'exemple représenté, la machine est équipée de deux conduits d'aspiration 77, présentant des extrémités inférieures d'aspiration 79 situées sensiblement au niveau du flasque inférieur 49. Les extrémités 79 sont disposées de part et d'autres de la direction de plongée et sont orientées de manière à aspirer les copeaux qui remontent lors du tréflage.

Chaque conduit 77 présente également une extrémité supérieure 81, agencée au niveau du flasque supérieur 51, et configurée pour être raccordée à un circuit d'aspiration d'air non représenté.

Dans l'exemple représenté, le porteur 83 est prévu pour déplacer la machine de tréflage 35 d'une chandelle 27 à une autre.

Ce porteur 83 est un robot polyarticulé.

Le porteur 83 comporte une base 86 et un bras 87 monté sur la base 86. Le bras 87 présente plusieurs degrés de liberté en rotation, par exemple 6 degrés de liberté.

La base 86 est montée coulissante sur le sol 89 de l'atelier 5 le long de rails 91.

Par ailleurs, la pièce à découper (sommier par exemple) est monté sur un plateau rotatif.

Ainsi, le positionnement de l'outil de tréflage 7 par rapport à la pièce 3 est assuré par deux moyens complémentaires.

Le porteur 83 permet de placer la machine de tréflage 35 en un point déterminé de la pièce 3.

Dans l'exemple présenté, où la pièce à découper est un sommier d'un réacteur de type surgénérateur, le porteur 83 permet de placer la machine de tréflage 35 au niveau d'une chandelle 27, le verrouillage 39 permettant ensuite de fixer rigidement la machine à la chandelle 27 et éventuellement aux chandelles voisines.

La liaison pivotante 43 du châssis mobile 41 au châssis 37 permet ensuite de déplacer l'outil de tréflage 7 localement autour de la chandelle 27 sur laquelle est montée la machine de tréflage 35. Ceci permet de réaliser des plongées sur une portion en arc de cercle de la ligne de découpe 19 située autour de ladite chandelle 27.

Une fois les plongées réalisées sur toute la portion en arc de cercle, la machine de tréflage 35 est déplacée jusqu'à une autre chandelle 27 par le porteur 83.

L'accouplement 85 est de tout type adapté. Il comporte par exemple une partie d'accouplement 93 rigidement fixée au châssis 37 (figure 3) et une partie complémentaire d'accouplement 95 rigidement fixée à l'extrémité du bras 87.

L'accouplement 85 est typiquement conçu pour permettre l'alimentation de la machine de tréflage 7 en différentes utilités, par exemple en fluides, ou pour faire passer des courants électriques faibles. Les moteurs de la machine sont alimentés et commandés par un ombilical.

Comme visible sur la figure 1, l'atelier 5 est conçu de telle sorte que la pièce découpée 3 soit placée sous le sol 89 de l'atelier. Une tranchée 97, ménagée dans le sol 89, permet d'accéder à la pièce à découper 3. Cette tranchée 97 est fermée par des trappes blindées 99, alignées suivants une direction longitudinale sensiblement parallèle au rail 91. Les trappes 99 sont susceptibles d'être déplacées indépendamment des unes des autres, par exemple par le robot cartésien équipant la cellule 5.

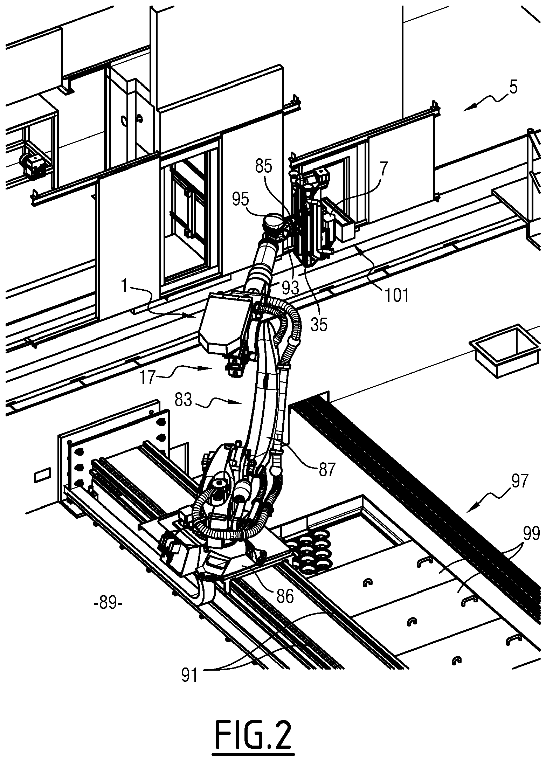

De manière avantageuse, l'ensemble 1 comprend un magasin de stockage 101, avec au moins un emplacement de stockage d'une fraise 9 de remplacement (figure 2).

Par exemple, le magasin 101 est un carrousel, permettant le stockage d'un grand nombre de fraises 9 de remplacement.

La liaison démontable 13 est conçue pour que la fraise 9 de remplacement soit montée sur le porte outil 11 par les parties opératives (changeur d'outils) du magasin d'outils.

Le porteur accoste la machine sur le changeur d'outil.

Un actionneur du changeur d'outil déverrouille la liaison démontable, récupère l'outil usé, positionne l'outil neuf et verrouille la liaison démontable.

Le porteur 83 est conçu pour permettre un positionnement du porte outil 11 suffisamment précis pour que cet accouplement soit possible.

En variante, l'actionneur est embarqué sur la machine de tréflage.

La méthode de découpe de l'invention va maintenant être détaillée.

Cette méthode est particulièrement adaptée pour être mise en œuvre avec l'ensemble 1 décrit plus haut. Inversement, l'ensemble de découpe 1 décrit plus haut est particulièrement adapté pour la mise en œuvre de la méthode de l'invention.

La méthode de l'invention est prévue pour découper une partie d'une pièce 3 d'un réacteur nucléaire.

La pièce 3 est typiquement l'un d'un interne de cuve de réacteur nucléaire ou de la cuve sous pression du réacteur nucléaire en cours de démantèlement.

En variante, la méthode de l'invention est utilisée dans le cadre d'une opération de réparation ou de remplacement de pièce.

Les pièces 3 sont typiquement telles que décrit plus haut.

La méthode comprend les étapes suivantes :
- Définition d'une ligne de découpe L sur une surface S de la pièce autour de ladite partie P à découper ;
- Découpe d'une rainure 8 le long d'au moins une partie de la ligne de découpe L à l'aide d'un outil de tréflage 7, en effectuant une pluralité d'opérations de tréflage successives le long de la ligne de découpe L, chaque opération de tréflage comprenant les sous-étapes suivantes :
   S1/ fraisage plongeant de la pièce 3 à l'aide de l'outil de tréflage 7 selon une direction de plongée, de telle sorte que la rainure 8 est prolongée le long de la ligne de découpe L par enlèvement de matière dans la pièce 3 ;
   S2/ extraction de l'outil de tréflage 7 hors de la rainure 8 ;
   S3/ déplacement de l'outil de tréflage 7 d'un pas le long de la ligne de découpe L.

A chaque sous étape de fraisage plongeant, la direction de plongée est sensiblement perpendiculaire à la surface S de la pièce 3 au point où est réalisé le fraisage plongeant.

La ligne de découpe L est comme décrit plus haut.

Elle est typiquement à contour fermé. En variante elle n'est pas à contour fermé, notamment quand la partie P est découpé dans un bord de la pièce 3.

Comme indiqué plus haut, la rainure 8 est réalisée à partir d'un bord de la pièce 3, ou à partir d'une amorce découpée à l'aide d'un autre outil que l'outil de tréflage.

La ligne de découpe L, dans l'exemple illustré sur les figures 5 et 6 est constituée d'une pluralité de portions en arc de cercle, placés dans le prolongement les unes des autres.

En variante, la ligne de découpe L a tout autre forme : elle comporte des portions rectilignes, des portions à angle droit etc...

Comme décrit plus haut, la découpe de la partie P de la pièce 3 est réalisée en mettant en œuvre une découpe par tréflage. L'outil de tréflage est enfoncé dans la pièce 3 suivant la direction de plongée puis extrait hors de la rainure 8. Cette opération est répétée tout au long de la ligne de découpe L.

Typiquement chaque fraisage plongeant est traversant, de telle sorte que, lorsque tous les fraisages plongeants ont été réalisés, la partie P est entièrement séparée de la pièce 3. Notamment, plusieurs épaisseurs de pièces peuvent être découpées à chaque fraisage plongeant.

En variante, les fraisages plongeants ne sont pas traversants. Une telle solution est avantageuse :
- Lorsque le tréflage est un moyen de prédécoupe d'une partie de l'épaisseur ;
- Lorsque l'épaisseur à découper est telle que plusieurs fraises de tréflage de diamètres différents doivent être mis en œuvre ;
- Lorsqu'il existe un intérêt à pratiquer une ségrégation des copeaux en fonction de leur provenance dans l'épaisseur de la pièce, notamment pour les trier entre différentes catégories radiologiques de déchets.

Afin de réaliser le positionnement de l'outil de tréflage 7, celui-ci est monté sur une machine de tréflage 35 qui, à la sous étape de fraisage plongeant S1, est rigidement fixée à la pièce à découper 3.

La machine de tréflage 35 est typiquement du type décrit plus haut.

Ainsi, le poids de la machine de tréflage est repris par la pièce à découper. Par ailleurs, au moins 50% des efforts dus au tréflage sont repris par la pièce à découper 3, via la machine de tréflage 35. Typiquement, au moins 75% des efforts du tréflage sont repris par la pièce à découper 3, et encore de préférence au moins 90% des efforts de tréflage sont repris par la pièce à découper. Par exemple, 100% des efforts de tréflage sont repris par la pièce à découper.

Ces efforts sont à la fois les efforts axiaux résultant de l'enfoncement de l'outil de tréflage 7 dans la pièce 3, et les efforts circonférentiels (couple d'entraînement) due à la rotation de la fraise 9 dans le trou et les efforts radiaux nécessaires au maintien de l'outil sur sa trajectoire de plongée

Par ailleurs, la machine de tréflage 35 est déplacée par rapport à la pièce à découper 3 par un porteur 83 .

Le porteur 83 est typiquement comme décrit plus haut.

Ainsi, le déplacement de l'outil de tréflage 7 le long de la ligne de découpe L est obtenu en utilisant deux moyens combinés. Le porteur 83 permet de positionner la machine de tréflage 35 par rapport à la pièce à découper 3. La machine de tréflage 35 permet de positionner l'outil de tréflage 7 par rapport au châssis de la machine de tréflage 35, et donc par rapport à la pièce à découper 3.

De ce fait, la méthode comprend avantageusement une pluralité de séquences de tréflage. Chaque séquence de tréflage comprend une pluralité d'opérations de tréflage, la machine de tréflage 35 étant rigidement fixée à un même point de la pièce 3 ou d'un support rigidement lié à la pièce pour les différentes opérations de tréflage d'une même séquence de tréflage.

Dans le cas où la pièce découpée 3 est le sommier d'un surgénérateur, la machine de tréflage 35 est rigidement fixée à une même chandelle 27 ou à un même groupe de chandelles 27 pendant une séquence de tréflage donnée. Pour deux séquences de tréflage différentes, la machine de tréflage 35 est fixée à des chandelles 27 différentes. Les fraisages plongeants réalisés aux différentes opérations de tréflage de la même séquence de tréflage permettent de réaliser un segment continu de la rainure 8.

Au cours d'une même séquence de tréflage, la sous-étape de déplacement de l'outil de tréflage 7 le long de la ligne de découpe L est effectuée par déplacement de l'outil de tréflage 7 par rapport au châssis 37 de la machine de tréflage 35.

Dans le cas d'application au sommier de surgénérateur, chaque séquence de tréflage permet de réaliser la rainure 8 le long d'une des portions arquées de la ligne de découpe L. L'outil de tréflage 7 est déplacé le long de ladite portion par rotation du châssis pivotant 41 par rapport au châssis 37.

A la fin de chaque séquence de tréflage, le verrouillage 39 libère la machine de tréflage 35 par rapport à la pièce 3, et la machine de tréflage 35 est déplacée d'un point à un autre de la pièce 3 par le porteur 83.

La machine de tréflage 35 est ensuite de nouveau fixée à la pièce 3 par le verrouillage 39.

En variante, le positionnement de la machine de tréflage 35 n'est pas assuré par un porteur mais par des moyens de levage. La machine de tréflage 35 est positionnée et fixée sur un support adapté et lié à la pièce 3. Tout autre moyen de liaison machine / pièce peut être envisagé (dont pieds magnétiques, ventouse à dépression, etc).

Une fois la rainure 8 réalisée le long de toute la ligne de découpe L, la partie P de la pièce 3 est évacuée, par tous moyens adaptées. Par exemple elle est évacuée à l'aide du pont cartésien équipant l'atelier 5.

La méthode comporte éventuellement une étape d'échange de la fraise 9, la fraise 9 usée étant remplacée par une fraise 9 de remplacement.

Le porteur 83 déplace la machine de tréflage jusqu'à un magasin de stockage 101 ayant au moins un emplacement de stockage d'une fraise 9 de remplacement (figure 2).

La liaison démontable 13 est conçue pour que la fraise 9 de remplacement soit montée sur le porte outil 11 par les parties opératives (changeur d'outils) du magasin d'outils.

Le porteur accoste la machine sur le changeur d'outil.

Un actionneur du changeur d'outil déverrouille la liaison démontable, récupère l'outil usé, positionne l'outil neuf et verrouille la liaison démontable.

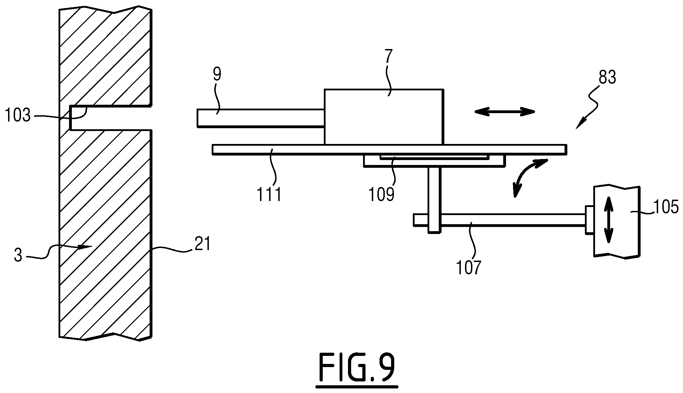

Un second mode de réalisation de l'invention va maintenant être décrit, en référence à la figure 9. Seuls les éléments par lesquels ce second mode de réalisation diffère du premier seront détaillés ci-dessous. Les éléments identiques ou assurant la même fonction dans les deux modes de réalisation seront désignés par les mêmes références.

Dans ce second mode de réalisation, la pièce 3 à découper est par exemple la cuve du réacteur nucléaire.

Dans ce cas, la surface à partir de laquelle sont réalisées les rainures de découpe est typiquement la surface interne de la cuve, c'est-à-dire la surface tournée vers l'intérieur de la cuve.

Les fraisages plongeants réalisés à chaque opération de tréflage ne sont pas traversants. La rainure 103 reste fermée par une épaisseur de matière.

En d'autres termes, la rainure 103 est borgne, et ne traverse pas entièrement la paroi de la cuve. La rainure 103 ne débouche pas côté extérieur de la cuve, du fait de l'épaisseur de matière restant au fond de la rainure, vers l'extérieur de la cuve.

Dans ce cas, la méthode comprend une étape de découpe finale, au cours de laquelle l'épaisseur de matière constituant le fond de la rainure 103 est découpée.

L'épaisseur de matière restant en fond de rainure, le long de la ligne de découpe, est éliminée par tous moyens adaptés, par exemple à l'aide d'une scie ou d'un autre moyen mécanique tel qu'un outil de tréflage de diamètre inférieur ou égal à la largeur de la rainure. En variante, des moyens de découpe thermiques ou par abrasion sont utilisés.

Dans le second mode de réalisation, le rainurage par tréflage de la pièce du réacteur nucléaire est avantageusement effectué sous eau, par exemple avec la cuve du réacteur remplie d'eau. L'étape de découpe finale intervient une fois que la cuve est vide, ou que le niveau d'eau a été abaissé sous le niveau de la coupe.

En variante, le perçage par tréflage est effectué à l'air.

Cette méthode est particulièrement avantageuse.

La partie de la cuve la plus active, située vers l'intérieur, est découpée sous eau de manière à assurer une protection radiologique la plus efficace possible. Du fait que les fraisages plongeants ne sont pas débouchant, les risques de dispersion de contamination vers l'extérieur de la cuve sont minimes.

Dans ce second mode de réalisation, les moyens de positionnement 17 ne sont pas du même type que dans le premier mode de réalisation. Les moyens de positionnement 17 comportent dans ce cas typiquement une structure fixe 105, appelée aussi support, qui est fixe par rapport à la cuve. Les moyens de positionnement 17 comprennent par ailleurs un premier châssis 107, sélectivement déplaçable suivant l'axe de la cuve par rapport à la structure fixe 105. Les moyens de positionnement 17 comprennent encore un second châssis 109, déplaçable circonférenciellement par rapport au premier châssis 107, autour de l'axe central de la cuve. L'outil de tréflage 7 est rigidement fixé à un plateau 111, déplaçable radialement par rapport au second châssis 109. Dans ce cas, la direction de plongée correspond à la direction radiale par rapport à l'axe central de la cuve. Le dispositif comprend par ailleurs de préférence un mécanisme de verrouillage non représenté qui permet le verrouillage de la machine sur la structure fixe et/ou sur la pièce à découper. Ce mécanisme de verrouillage peut être de toute forme connue, comme par exemples non limitatifs mécanique et/ou magnétique et/ou électromagnétique.

La structure fixe 105 est par exemple une plateforme positionnée dans la cuve d'un réacteur de type PWR ou BWR. La machine est indexée sur la plateforme et coupe la cuve.

Cette disposition permet d'éviter le transfert de la cuve entière, Seuls sont alors transférés soit des anneaux ou des tronçons de cuve, soit des secteurs de tronçon. Dans ce dernier cas les morceaux coupés sont au format compatible avec les conteneurs de confinement des déchets.

En variante, le positionnement de la machine de tréflage n'est pas assuré par un robot porteur ou par le biais de châssis déplaçables, mais par des moyens de levage. La machine est indexée sur le support, lié à la pièce à découper. Cette pièce est typiquement la cuve sous pression du réacteur, mais peut aussi être une autre structure du réacteur.

La méthode et l'ensemble de la découpe décrits plus haut présentent de nombreux avantages.

Ils permettent une meilleure maitrise de la pollution issue de la coupe, comparé notamment à une découpe par procédé thermique ou par abrasion.

La productivité de l'opération de coupe est élevée.

Les possibilités d'automatisation sont excellentes, les interventions humaines sont réduites au minimum.

Les copeaux de matière issus du tréflage sont réguliers en taille et en forme, et ont un comportement cinématique prévisible, permettant la mise en place de moyens de captation efficaces.

Les efforts de coupe sont plus faibles qu'avec d'autres méthodes de coupe mécaniques, ce qui permet de concevoir une machine moins massive et encombrante. La puissance nécessaire pour la coupe est réduite, de telle sorte que les besoins en puissance électrique sont plus faibles qu'avec d'autres méthodes de coupe. Le moindre besoin de puissance réduit la masse et l'encombrement de la machine de découpe, ce qui permet d'élargir les cas d'application.

Ceci permet notamment la manipulation par un robot téléopéré. Le robot n'est utilisé que pour positionner la machine de tréflage. La remontée d'effort dans le bras du robot téléopéré est réduite par la mise en œuvre du verrouillage de la machine sur la pièce à découper ou sur un support lié à la pièce. Une partie de la trajectoire de coupe est assurée par la machine elle-même, qui intègre les actionneurs permettant de déplacer l'outil de tréflage.

Selon une autre variante mettant en oeuvre un robot, la machine de tréflage n'est pas verrouillée sur la pièce à découper ou sur un support. Le porteur appuie fortement la machine sur la pièce, ce qui suffit à la bloquer en position par rapport à la pièce.

Selon une autre variante ne mettant pas en oeuvre un robot, le support de la machine est fixé de manière rigide à la pièce à découper. Ceci est typiquement le cas quand la pièce est la cuve sous pression et que cette cuve est découpée in situ. La machine est indexée sur son support. Elle est déplacée par exemple par des moyens de levage.

Ceci permet la précision requise dans le positionnement de l'outil de tréflage, qui peut ainsi intervenir dans des espaces restreints. L'ensemble de l'invention peut par exemple intervenir sur des pièces dont la surface porte des structures saillantes, telles que le sommier décrit plus haut.

Le risque de coincement de lame est supprimé. En effet, pour une découpe par sciage par disque ou par ruban, les contraintes dans la pièce coupée peuvent refermer la découpe et pincer la lame. Ce risque n'existe pas avec le tréflage, du fait de la forme cylindrique de l'outil de découpe, le pincement de la pièce est négligeable dans la zone où l'outil plonge.

Par ailleurs, pour obtenir des profondeurs de découpe entre quelques dizaines de millimètres (60 millimètres) et quelques centaines de millimètres (600 millimètres), le procédé utilise des porte-outils de grande longueur. Ces porte-outils permettent notamment de réaliser des coupes profondes sans être gêné par les structures saillantes à la surface de la pièce à découper, par exemple les extrémités supérieures des chandelles pour les sommiers de surgénérateur.

Du fait que la découpe est réalisée par des moyens mécaniques, elle n'est pas sujette aux problèmes liés à l'évacuation de la matière fondue, rencontrés avec les méthodes de découpes thermiques. En effet, pour de fortes épaisseurs, la matière fondue a tendance à se figer dans la tranchée en arrière de la passe de découpe.

La méthode et l'ensemble de découpe peuvent présenter de multiples variantes.

Le positionnement de l'outil de tréflage peut être obtenu de multiples manières. Deux approches ont été décrites pour le positionnement de l'outil de tréflage. Toutefois, d'autres approches sont envisageables.

Il a été décrit plus haut que les fraisages plongeants réalisés dans la pièce constituent une rainure entièrement continue autour de la pièce à découper. En variante, il est possible de laisser quelques ponts de matière de faible largeur le long de la ligne de découpe. La rainure présente ainsi la forme d'un pointillé. Ceci permet par exemple d'assurer le maintien en place provisoire de la partie destinée à être séparée de la pièce.

## Revendications

1. Méthode pour découper une partie (P) d'une pièce (3) d'un réacteur nucléaire, la méthode comprenant les étapes suivantes :
- définition d'une ligne de découpe (L) sur une surface (S) de la pièce (3), autour de ladite partie (P) ;
- découpe d'une rainure (8) le long d'au moins une partie de la ligne de découpe (L) à l'aide d'un outil de tréflage (7), en effectuant une pluralité d'opérations de tréflage successives le long de la ligne de découpe (L), chaque opération de tréflage comprenant les sous-étapes suivantes :
S1/ fraisage plongeant dans la pièce (3) à l'aide de l'outil de tréflage (7) selon une direction de plongée, de telle sorte que la rainure (8) est prolongée le long de la ligne de découpe (L) par enlèvement de matière dans la pièce (3) ;
S2/ extraction de l'outil de tréflage (7) hors de la rainure (8) ;
S3/ déplacement de l'outil de tréflage (7) d'un pas le long de la ligne de découpe (L).

2. Méthode selon la revendication 1, dans laquelle à chaque sous-étape de fraisage plongeant, la direction de plongée est sensiblement perpendiculaire à la surface (S) de la pièce (3) au point où est réalisé le fraisage plongeant.

3. Méthode selon l'une quelconque des revendications précédentes, dans laquelle l'outil de tréflage (7) est monté sur une machine de tréflage (35) qui, à la sous-étape fraisage plongeant, est rigidement fixée à la pièce à découper (3) de telle sorte qu'au moins 50% des efforts dus au tréflage sont repris par la pièce à découper (3).

4. Méthode selon la revendication 3, dans laquelle l'étape de découpe de la rainure comprend une pluralité de séquences de tréflage, chaque séquence de tréflage comprenant une pluralité d'opérations de tréflage, la machine de tréflage (35) étant rigidement fixée à un même point de la pièce (3) pour les différentes opérations de tréflage d'une même séquence de tréflage et la machine de tréflage (35) étant repositionnée entre deux séquences de tréflage.

5. Méthode selon la revendication 4 , dans laquelle au cours d'une même séquence de tréflage, la sous-étape de déplacement de l'outil de tréflage (7) le long de la ligne de découpe (L) est effectuée par déplacement de l'outil de tréflage (7) par rapport à un châssis (37) de la machine de tréflage (35).

6. Méthode selon l'une quelconque des revendications précédentes, dans laquelle la pièce (3) est l'un de la cuve sous pression d'un réacteur nucléaire en cours de démantèlement, ou d'un interne de ladite cuve.

7. Méthode selon la revendication 6, dans laquelle la pièce (3) est la cuve sous pression du réacteur nucléaire, les étapes de perçage étant réalisées à partir de la surface interne (S) de la cuve, la rainure (8) n'étant pas débouchante et restant fermée par une épaisseur de matière.

8. Méthode selon la revendication 7, dans laquelle la méthode comporte une étape de découpe finale au cours de laquelle l'épaisseur de matière constituant le fond de la rainure (8) est découpée.

9. Ensemble de découpe d'une partie d'une pièce d'un réacteur nucléaire, l'ensemble (1) comprenant:
- un outil de tréflage (7) ;
- des moyens (17) de positionnement de l'outil de tréflage (7) par rapport à la pièce (3), configurés pour déplacer l'outil de tréflage (7) par pas le long d'une ligne de découpe (L) s'étendant sur une surface (S) de la pièce (3) autour de la partie (P) à découper ;
- un entraînement (31) de plongée, configuré pour déplacer l'outil de tréflage (7) par rapport à la pièce (3) suivant une direction de plongée, de telle sorte que l'outil de tréflage (7) réalise un fraisage plongeant dans la pièce (3) selon la direction de plongée et prolonge une rainure (8) le long de la ligne de découpe (L) par enlèvement de matière dans la pièce (3), et configuré pour extraire l'outil de tréflage (7) hors de la rainure (8).

10. Ensemble de découpe selon la revendication 9, dans lequel les moyens de positionnement (17) comprennent une machine de tréflage (35), comportant un châssis (37) et un verrouillage (39) configuré pour fixer sélectivement le châssis (37) sur la pièce (3).

11. Ensemble de découpe selon la revendication 10, dans lequel la machine de tréflage (35) comprend un châssis mobile (41), et une liaison (43) pivotante du châssis mobile (41) au châssis (37) configurée pour permettre une rotation du châssis mobile (41) par rapport au châssis (37) autour d'un axe de pivotement sensiblement parallèle à la direction de plongée.

12. Ensemble de découpe selon la revendication 11, dans lequel l'outil de tréflage (7) est lié au châssis pivotant (41) par l'entraînement de plongée (31).

13. Ensemble de découpe selon l'une quelconque des revendications 10 à 12, dans lequel les moyens de positionnement (17) comprennent un porteur (83) et un accouplement (85) du porteur (83) à la machine de tréflage (35), le porteur (83) étant configuré pour déplacer la machine de tréflage (35) par rapport à la pièce (3).

14. Ensemble de découpe selon l'une quelconque des revendications 10 à 12, dans lequel les moyens de positionnement (17) comprennent un support (105) lié à la pièce (3), la machine de tréflage (35) étant indexée sur le support (105).

15. Ensemble de découpe selon la revendication 13 ou 14, dans lequel l'outil de tréflage (7) comporte une fraise (9), un porte outil (11) et une liaison (13) démontable de la fraise (9) au porte outil (11), l'ensemble (1) comprenant un magasin de stockage (101) avec au moins un emplacement de stockage d'une fraise de remplacement (9), et un actionneur configuré pour déverrouiller la liaison démontable de la fraise (9) au porte outil (11), l'actionneur étant embarqué sur le magasin de stockage (101) ou sur la machine de tréflage (35).
